# EUROPEAN PATENT SPECIFICATION

(11) **EP 1 692 902 B1**
(45) Date of publication and mention of the grant of the patent: **05.05.2010**
(21) Application number: 04765096.5
(22) Date of filing: 11.09.2004
(51) Int. Cl.: H04L 29/06, H04W 8/26, H04W 12/08, H04W 80/04, H04W 76/04

(54) **SYSTEM AND METHOD PROVIDING SECURE ACCESS AND ROAMING SUPPORT FOR MOBILE SUBSCRIBERS IN A SEMI-CONNECTED MODE**
SYSTEM UND VERFAHREN ZUR BEREITSTELLUNG VON SICHEREM ZUGANG UND ROAMING-SUPPORT FÜR MOBILE TEILNEHMER IN EINEM HALBVERBUNDENEN MODUS
SYSTEME ET PROCEDE DE FOURNITURE D'UN ACCES SECURISE ET UN SUPPORT D'ITINERANCE AUX ABONNES MOBILES EN MODE SEMI-CONNECTE

(30) Priority: 25.11.2003 US 722185
(43) Date of publication of application: 23.08.2006
(73) Proprietor: TELEFONAKTIEBOLAGET LM ERICSSON (publ), 164 83 Stockholm (SE)
(72) Inventor: SAPIENZA, Andrea, I-95029 Viagrande (IT); RITTERBECKS, Arndt, NL-6369 HC Simpelveld (NL)
(74) Representative: Kribber, Klaus-Dieter
(86) International application number: PCT/EP2004/010173
(87) International publication number: WO 2005/055630

(56) References cited:
- WO-A-00/35151
- WO-A-99/25107
- MOOI CHOO CHUAH ET AL: "Mobile virtual private dial-up services" BELL LABS TECHNICAL JOURNAL, WILEY, CA, US, vol. 4, no. 3, July 1999 (1999-07), pages 51-72, XP002150714 ISSN: 1089-7089
- MIKAEL LATVALA, ERICSSON: "Semi Connected Mode for PPP links; draft-ietf-pppext-scm-01.txt" IETF INTERNET DRAFT, POINT-TO-POINT PROTOCOL EXTENSION GROUP, November 1998 (1998-11), pages 1-20, XP002312414 cited in the application

## Description

### FIELD OF THE INVENTION

The present invention relates to telecommunication systems. More particularly, and not by way of limitation, the invention relates to a system and method for providing secure access and roaming support for mobile subscribers who are connected to a telecommunication network in a Semi-Connected Mode (SCM).

### BACKGROUND ART

In order to access the Internet from a (mobile) phone via an access server, a Point-to-Point Protocol (PPP) connection is established. Negotiation and setup of the PPP connection is conducted in several phases. First, in the Link Control Protocol (LCP) phase, a link is configured. Afterwards, in the Password Authentication Protocol/Challenge Handshake Authentication Protocol (PAP/CHAP) phase, user authentication is performed. Finally, in the network phase, the configuration of the network layer is performed to complete the setup of the PPP connection. For each phase, configuration messages are sent between the mobile phone and the access server. In comparison to the Integrated Services Digital Network (ISDN), negotiation and setup of the PPP connection in mobile networks is quite lengthy due to the relatively long delays of data bearers in wireless networks.
In Mooi Choo Chuah et al., "Mobile virtual private dial-up services", Bell Labs Technical Journal, Wiley, CA, US, vol. 4, no. 3, July 1999, p. 51-72, a mobile host establishes a connection to a packet data service node and initiates PPP link control protocol negotiations. When the mobile host moves from one cell to another, it does not have to renegotiate a new PPP session. This is achieved by having a new serving L2TP access concentrator initiating a continued call transaction upon receiving a link layer message from the mobile host that a handoff is occurring and that there is an existing PPP session. A three-hop embodiment uses an anchor L2TP access concentrator to achieve the continued call transaction.

When a mobile user has no data to transmit for a period of time, it would be useful to temporarily disconnect the call, and then re-establish the call when there is again a need to send data. However, the delay associated with the negotiation and setup of the PPP connection in mobile networks prevents the user from re-establishing the connection in a timely manner. Such a procedure could only be attractive for the user if the delay introduced by the PPP negotiation performed at re-establishment can be shortened.

A new feature referred to herein as the Semi-Connected Mode (SCM) has been presented to the Internet Engineering Task Force (IETF); cf. Mikael Latvala, Ericsson: "Semi Connected Mode for PPP links; draft-ietf-pppext-scm-01.txt", IETF Internet Draft, Point-to-Point Protocol Extension Group, Nov. 1998. Referred to by various other names in the industry, SCM introduces a new state referred to herein as the "Semi-Connected state" to the PPP state machine. The new state allows faster reestablishment of a PPP connection by saving and reusing the parameters that have been hand-shaken in an original, but temporarily disconnected, connection. Simply stated, SCM bypasses the PPP configuration phases by re-using the PPP configuration information of the last session, and utilizing the user's Calling Number identification (CNID) for authentication.

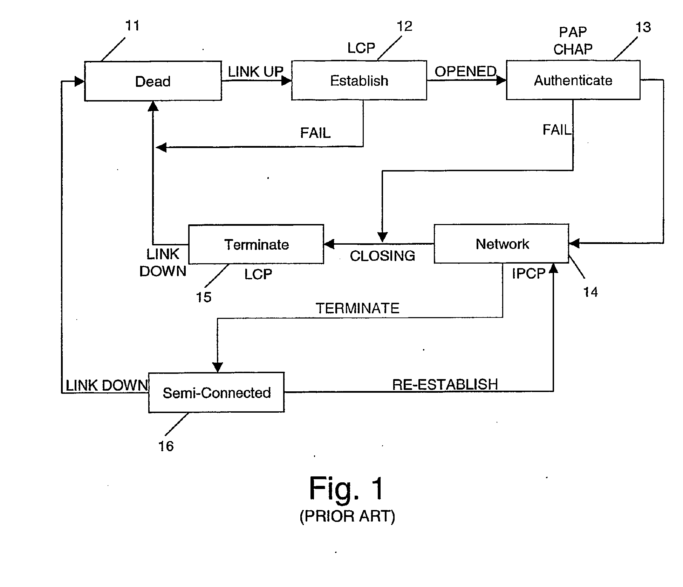

FIG. 1 illustrates the PPP state machine 10. From a "Dead" state 11, call setup begins when a link is configured in an "Establish" state 12. Authentication is then performed in an "Authenticate" state 13. If authentication is successful, the PPP state machine moves to a "Network" state 14. When the conncetion is permanently disconnected, the state machine moves to a "Terminate" state 15, and then returns to the Dead state. The connection enters the "Semi-Connected" state 16 when the call is temporarily disconnected after a successful PPP negotiation (i.e., PPP in Network State). The connection will remain in the Semi-Connected state for a predefined wait-time as configured in the access server. If a new call from the same GSM subscriber is received when in the Semi-Connected state, the CNID is used for authenticating the call (i.e., the CNID is checked to determine that the call comes from the same mobile subscriber as the initial call). The connection then returns to the Network state. If no new call is received during the wait-time when in the Semi-Connected state, a timeout occurs, and the state machine returns to the Dead state.

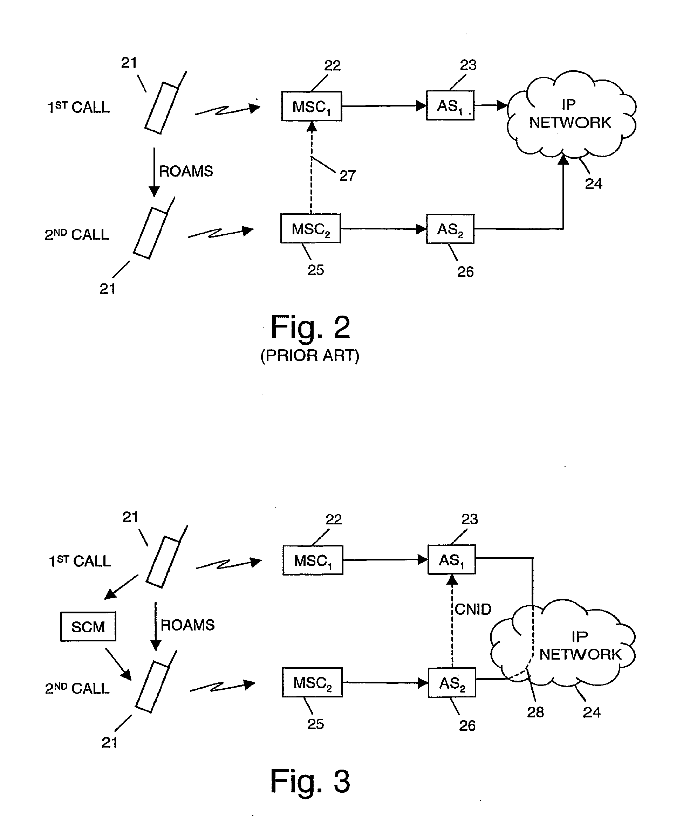

FIG. 2 is a simplified block diagram of a network PPP connection illustrating a problem that occurs in the prior art when attempting to use SCM with a roaming mobile subscriber. A first call and PPP connection are set up from a mobile station 21 through a first Mobile Switching Center (MSC₁) 22, and a first Access Server (AS₁) 23 to an Internet Protocol (IP) network 24. The call is then temporarily disconnected, moving the connection to the Semi-Connected state. Meanwhile, if the mobile station roams to a new location and attempts to re-establish the call, the second call may be directed to a second MSC (MSC₂) 25 and a second Access Server (AS₂) 26. In this case, AS₂ will not find a cache entry that matches the mobile station's CNID. Therefore, AS₂ treats the call as a new PPP login, and follows the lengthy PPP connection process. Thus, following a temporary disconnection, SCM requires that the subsequent call be placed in the same access server as the first call. To be able to use SCM in such cases, a call would have to be directed towards the old access server, AS₁. This is not possible in most cases, although, if AS₁ is addressed directly in the subsequent call, it is possible for MSC₂ to establish a circuit-switched connection 27 to MSC₁ for redirecting the call to AS₁. However, this results in a waste of the circuit-switched network resources.

There is also a potential security problem with the prior art SCM method. As noted above, the calling subscriber's CNID is used to authenticate the subsequent calls when SCM is used. In some cases, however, the CNID does not uniquely identify the calling subscriber. For example, in the case of a call originated from a private branch exchange (PABX) by Primary Rate Access (PRA), the group number may be used as the calling party number. Therefore, all the extensions belonging to the PABX will send the same calling party number, and anyone originating a call from the PABX will be reconnected to the established call.

Thus, there is a need for a system and method for providing secure access and roaming support for mobile subscribers who are connected to a telecommunication network in the Semi-Connected Mode (SCM). The present invention provides such a system and method.

### SUMMARY OF THE INVENTION

In one aspect, the present invention is directed to a method of providing secure access and roaming support for a mobile subscriber connected to a telecommunication network in a Semi-Connected Mode (SCM). The method includes the steps of establishing a first call from the mobile subscriber to a first access server, and establishing a point-to-point protocol (PPP) connection from the mobile subscriber to an Internet Protocol (IP)-based network through the first access server. The first access server then provides the mobile subscriber with an identifier for the first access server. Optionally, for cases in which the CNID of the mobile subscriber does not uniquely identify the subscriber (for example the CNID is a group number from a PABX), AS₁ may also provide the subscriber with a password that uniquely identifies the client. The password is stored in AS₁ and is accessible using the CNID for the calling subscriber as a lookup key. When the mobile subscriber disconnects the first call, the connection moves to the SCM state. This is followed by receiving from the mobile subscriber, the identifier for the first access server. The identifier is received in a second access server that handles a subsequent call origination from the mobile subscriber to the IP-based network. The second access server utilizes the identifier for the first access server to send a Calling Number Identification (CNID) for the mobile subscriber from the second access server to the first access server. This is followed by establishing a PPP tunnel through the IP-based network between the first access server and the second access server; tunnelling PPP packets from the second access server to the first access server; and re-establishing the connection from the mobile subscriber to the IP-based network. The step of receiving the identifier for the first access server from the mobile subscriber includes receiving the identifier by the second access server utilizing the User-to-User Signalling (UUS) Supplementary Service before starting subsequent PPP setup.

In another aspect, the present invention is directed to a method of providing secure access and roaming support for a mobile subscriber connected to a telecommunication network in an SCM state. The method includes the steps of establishing a first call from the mobile subscriber to a first access server, and establishing a PPP connection from the mobile subscriber to an IP-based network through the first access server. The first access server then provides the mobile subscriber with an identifier for the first access server. When the mobile subscriber disconnects the first call, the connection moves to the SCM state. This is followed by receiving from the mobile subscriber, the identifier for the first access server. The identifier is received in a second access server that handles a subsequent call origination from the mobile subscriber to the IP-based network.

The second access server analyzes the identifier for the first access server to determine whether the second access server is the first access server. If the second access server is the first access server, the access server determines whether it recognizes the CNID for the mobile subscriber. If the CNID is recognized, the access server re-establishes the connection from the mobile subscriber to the IP-based network. If the CNID is not recognized, the access server starts a new PPP setup to establish a new connection from the mobile subscriber to the IP-based network. However, if the second access server is not the first access server, the second access server sends the CNID for the mobile subscriber to the first access server. The first access server then determines whether it recognizes the CNID for the mobile subscriber. If the CNID is recognized, the first access server uses the CNID to look up SCM data for the connection. A PPP tunnel is then established through the IP-based network between the first access server and the second access server, and PPP packets are tunnelled from the second access server to the first access server. The connection from the mobile subscriber to the IP-based network is then re-established. If the CNID is not recognized, the first access server sends a negative reply to the second access server. The second access server then starts a new PPP setup to establish a new connection from the mobile subscriber to the IP-based network. The receiving the identifier for the first access server from the mobile subscriber includes receiving the identifier by the second access server utilizing the User-to-User Signalling (UUS) Supplementary Service before starting subsequent PPP setup.

In yet another aspect, the present invention is directed to a system for providing secure access and roaming support for a mobile subscriber connected to a telecommunication network in an SCM state. The system includes a first access server that establishes a call and a PPP connection from the mobile subscriber to an IP-based network; a second access server that handles a subsequent call origination from the mobile subscriber to the IP-based network; and a PPP tunnel between the first access server and the second access server. The first access server includes communication means for providing the mobile subscriber with an identifier for the first access server; and means controlled by a PPP state machine for placing the connection in a Semi-Connected state when the mobile subscriber disconnects the call, and for placing the connection in a Network state when the mobile subscriber originates the subsequent call origination. The second access server includes communication means for receiving the identifier for the first access server from the mobile subscriber, and for sending the CNID for the mobile subscriber from the second access server to the first access server. The second access server also includes means for tunnelling PPP packets from the second access server to the first access server through the PPP tunnel. In this manner, the connection from the mobile subscriber to the IP-based network is re-established. The communication means for receiving the identifier for the first access server from the mobile subscriber includes a signalling means that utilizes the User-to-User Signalling (UUS) Supplementary Service before starting subsequent PPP setup.

In still yet another aspect, the present invention is directed to a network access server for providing secure access and roaming support for a mobile subscriber connected to a telecommunication network in an SCM state. The network access server includes means for receiving a call origination request from the mobile subscriber that includes a CNID for the mobile subscriber; means for establishing a PPP connection from the mobile subscriber to the network; and means for providing the mobile subscriber with an identifier for the network access server. The network access server also includes means for storing SCM data for the connection and moving the connection to the SCM state when the mobile subscriber disconnects from the network access server; means for receiving from a subsequent access server, the CNID of the mobile subscriber when the mobile subscriber originates another call request through the subsequent access server; and means for retrieving the SCM data using the CNID of the mobile subscriber. The network access server also includes means for setting up a PPP tunnel through the network to the subsequent access server. The PPP tunnel re-establishes the connection from the mobile subscriber to the network by tunnelling PPP packets from the subsequent access server to the network access server without establishing a new PPP connection. The network access server is adapted to provide the mobile subscriber with a password that uniquely identifies the mobile subscriber if the mobile subscriber's CNID does not uniquely identify the mobile subscriber.

In still yet another aspect, the present invention is directed to a network access server for providing secure access and roaming support for a mobile subscriber connected to a telecommunication network in an SCM state. The network access server includes means for receiving a call origination request from the mobile subscriber that includes a CNID for the mobile subscriber and an identifier for a previous access server through which a PPP connection was previously established from the mobile subscriber to the network. The network access server also includes means for sending the CNID for the mobile subscriber to the previous access server and means for setting up a PPP tunnel through the network to the previous access server in response to a request from the previous access server. The PPP tunnel re-establishes the connection from the mobile subscriber to the network by tunnelling PPP packets from the network access server to the previous access server without establishing a new PPP connection. The network access server is adapted to receive the identifier for the previous access server utilizing a User-to-User Signalling (UUS) Supplementary Service before starting subsequent PPP setup.

### BRIEF DESCRIPTION OF THE DRAWINGS

In the following section, the invention will be described with reference to exemplary embodiments illustrated in the figures, in which:

FIG. 1 (Prior Art) illustrates a Point-to-Point Protocol (PPP) state machine;

FIG. 2 (Prior Art) is a simplified block diagram of a network PPP connection illustrating a problem that occurs in the prior art when attempting to use SCM with a roaming mobile subscriber;

FIG. 3 is a simplified block diagram of a network PPP connection illustrating the preferred embodiment of the system of the present invention when using SCM with a roaming mobile subscriber; and

FIG. 4 is a flow chart illustrating the steps of the preferred embodiment of the method of the present invention.

### DETAILED DESCRIPTION OF PREFERRED EMBODIMENTS

In the following description, for purposes of explanation and not limitation, specific details are set forth, such as particular embodiments, circuits, signal formats etc. in order to provide a thorough understanding of the present invention. It will be apparent to one skilled in the art that the present invention may be practiced in other embodiments that depart from these specific details.

FIG. 3 is a simplified block diagram of a network PPP connection illustrating the preferred embodiment of the system of the present invention when using SCM with a roaming mobile subscriber. As utilized in the present invention, SCM provides a way to reduce the PPP setup delay, and therefore increase available radio resources and decrease costs for data transmission. When setting up an initial call, if the calling subscriber 21 wants to use the SCM, the client (e.g., mobile phone) of the calling subscriber may send a request for SCM to the first access server (AS₁) 23. If SCM is applicable for the call, AS₁ replies to the request and provides to the client an identifier of AS₁. The identifier may be, for example, an IP address of AS₁ that identifies AS₁ in the IP network 24. Optionally, for cases in which the CNID of the client does not uniquely identify the client (for example the CNID is a group number from a PABX), AS₁ may also provide the client with a password that uniquely identifies the client. The password is stored in AS₁ and is accessible using the CNID for the calling subscriber as a lookup key. AS₁ considers the CNID as the user-id to be used for login. The SCM request and reply exchanged between the client and AS₁ may be sent utilizing a vendor-specific extension in the PPP protocol or with IP packets. It should be recognized that the identifier of AS₁ and the password may also be sent without an explicit request from the client if, for example, the subscriber is marked as an SCM subscriber.

When the calling subscriber roams and originates a subsequent call, the client provides the access server of the subsequent call (AS₂) 26 with the identifier of AS₁ 23 (and optionally the password), which was received when setting up the initial call. The identifier may be sent using the PPP protocol, but is preferably sent to AS₂ utilizing the User-to-User Signalling (UUS) Supplementary Service. The UUS Supplementary Service is a standard GSM signalling method that enables users to exchange a limited amount of information between each other. The information is passed transparently through the network. Advantageously, UUS signalling is performed before a call is established (i.e., before an answer message is sent), and before PPP setup of the connection is started. In addition, a tunnel using the Layer 2 Tunnelling Protocol (L2TP) may also be set up in advance, before the connection is established. The UUS Supplementary Service is described in GSM 2.87 User to User Signalling (UUS) Service description stage 1; GSM 3.87 User to User Signalling (UUS) Supplementary Service Stage 2; GSM 4.87 User to User Signalling (UUS) Supplementary Service Stage 3; and the ISDN Supplementary Service ETSI UUS Stage 3, prETS 300 286, Dec. 1995.

AS₂ 26 uses the identifier of AS₁ 23 to send the CNID of the calling subscriber to AS₁. If a password is also sent, AS₁ uses the CNID to look up and verify the password. A PPP tunnel 28 is then established through the IP network 24 between AS₁ and AS₂. AS₂ then uses the tunnel to send PPP packets to AS₁, and the connection is re-established.

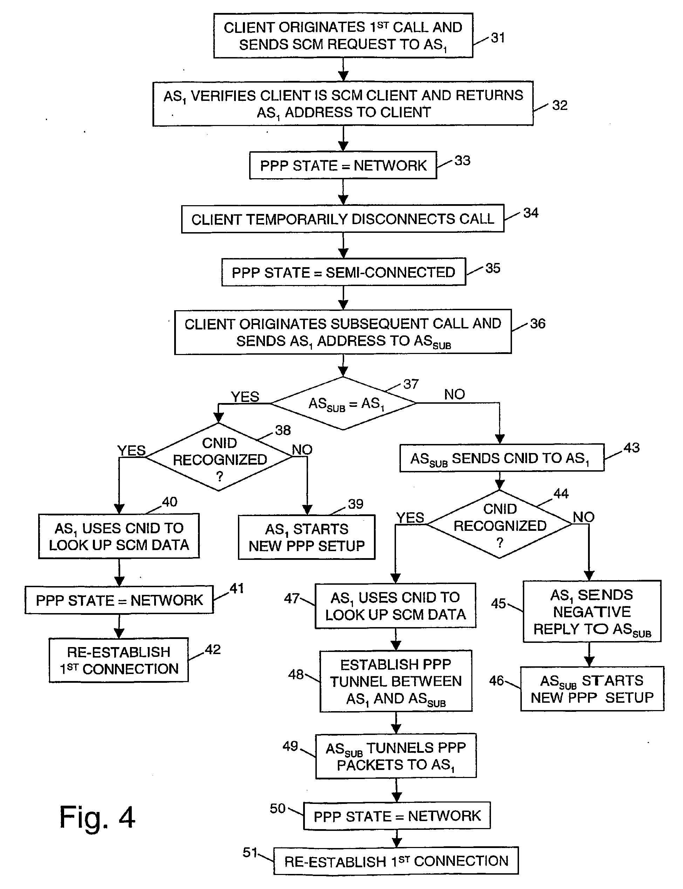

FIG. 4 is a flow chart illustrating the steps of the preferred embodiment of the method of the present invention. At step 31, the calling subscriber client originates a first call and sends an SCM request to AS₁. At step 32, AS₁ verifies that the client is authorized to use SCM and returns an identifier of AS₁ such as AS₁'s IP address to the client. At step 33, the PPP state then moves to Network, and the connection is established. At step 34, the client temporarily disconnects the call, and the PPP state of the connection moves to Semi-Connected at step 35.

The client may then roam to another location, which may or may not be served by AS₁, and at step 36, originates a subsequent call. The client sends the IP address of AS₁ to the access server that is serving the subsequent call (AS_{SUB}). At step 37, AS_{SUB} determines whether it is AS₁ by analyzing the IP address sent by the client. If AS_{SUB} is AS₁, the method moves to step 38 where AS₁ determines whether the CNID of the calling subscriber is recognized. If the CNID is not recognized, the method moves to step 39 where AS₁ begins a new PPP setup. However, if the CNID is recognized at step 38, the method moves to step 40 where AS₁ uses the CNID of the calling subscriber to look up the SCM data from the initial connection. At step 41, the PPP state moves to Network, and the connection is re-established at step 42.

However, if at step 37 it is determined that AS_{SUB} is not AS₁, the method moves from step 37 to step 43 where AS_{SUB} sends the CNID of the calling subscriber to AS₁ using the IP address supplied by the client. At step 44, AS₁ determines whether the CNID of the calling subscriber is recognized. If the CNID is not recognized, the method moves to step 45 where AS₁ sends a negative reply to AS_{SUB}. At step 46, AS_{SUB} begins a new PPP setup. However, if the CNID is recognized at step 44, the method moves to step 47 where AS₁ uses the CNID of the calling subscriber to look up the SCM data from the initial connection. At step 48, a PPP tunnel is established through the IP network between AS₁ and AS_{SUB}. At step 49, AS_{SUB} then tunnels PPP packets to AS₁. At step 50, the PPP state moves to Network, and the connection is re-established at step 51.

While the present invention has been described with respect to particular embodiments, those skilled in the art will recognize that the present invention is not limited to the specific embodiments described and illustrated herein. Therefore, while the present invention has been described in relation to its preferred embodiments, it is to be understood that this disclosure is only illustrative in nature. Accordingly, it is intended that the invention be limited only by the scope of the claims appended hereto.

## Claims

1. A method of providing secure access and roaming support for a mobile subscriber connected to a telecommunication network in a Semi-Connected Mode (SCM), said method comprising the steps of:
establishing a first call from the mobile subscriber to a first access server (31);
establishing a point-to-point protocol (PPP) connection from the mobile subscriber to an Internet Protocol (IP)-based network through the first access server (31, 33);
providing the mobile subscriber with an identifier for the first access server (32);
moving the connection to the SCM state (35) when the mobile subscriber disconnects the first call (34);
receiving from the mobile subscriber the identifier for the first access server, said identifier being received in a second access server that handles a subsequent call origination from the mobile subscriber to the IP-based network (36);
utilizing the identifier for the first access server to send from the second access server to the first access server, a Calling Number Identification (CNID) for the mobile subscriber (43);
establishing a PPP tunnel through the IP-based network between the first access server and the second access server (48);
tunnelling PPP packets from the second access server to the first access server (49); and
re-establishing the connection from the mobile subscriber to the IP-based network (51);
wherein the step of receiving the identifier for the first access server from the mobile subscriber includes receiving the identifier by the second access server utilizing the User-to-User Signalling (UUS) Supplementary Service before starting subsequent PPP setup.

2. The method of claim 1, wherein the step of providing the mobile subscriber with an identifier for the first access server also includes providing the mobile subscriber with a password that uniquely identifies the mobile subscriber if the mobile subscriber's CNID does not uniquely identify the mobile subscriber, and the method further comprises sending the password together with the CNID from the second access server to the first access server, and utilizing the CNID by the first access server to look up and verify the password.

3. The method of claim 1 or 2, wherein the step of receiving the identifier for the first access server from the mobile subscriber includes receiving in the second access server, an IP address for the first access server.

4. The method of claim 1, 2 or 3, wherein the step of establishing a connection from the mobile subscriber to the IP-based network includes sending a request to utilize the SCM from the mobile subscriber to the first access server.

5. The method of any of the claims 1 to 4, wherein the step of establishing a connection from the mobile subscriber to the IP-based network includes determining by the first access server that the mobile subscriber is authorized to utilize the SCM.

6. A method of providing secure access and roaming support for a mobile subscriber connected to a telecommunication network in a Semi-Connected Mode (SCM), said method comprising the steps of:
establishing a first call from the mobile subscriber to a first access server (31);
establishing a point-to-point protocol (PPP) connection from the mobile subscriber to an Internet Protocol (IP)-based network through the first access server (31, 33);
providing the mobile subscriber with an identifier for the first access server (32);
moving the connection to the SCM state when the mobile subscriber disconnects the first call (34, 35);
receiving from the mobile subscriber, the identifier for the first access server, said identifier being received in a second access server that handles a subsequent call origination from the mobile subscriber to the IP-based network( 36);
analyzing by the second access server, the identifier for the first access server to determine whether the second access server is the first access server (37);
if the second access server is the first access server:
determining whether a Calling Number Identification (CNID) for the mobile subscriber is recognized (38);
if the CNID is recognized, re-establishing the connection from the mobile subscriber to the IP-based network (42); and
if the CNID is not recognized, starting a new PPP setup to establish a new connection from the mobile subscriber to the IP-based network (39);
if the second access server is not the first access server:
sending from the second access server to the first access server, the CNID for the mobile subscriber (43);
determining whether the CNID for the mobile subscriber is recognized by the first access server (44);
if the CNID is recognized, using the CNID by the first access server to look up SCM data for the connection (47), establishing a PPP tunnel through the IP-based network between the first access server and the second access server (48), tunnelling PPP packets from the second access server to the first access server (49), and re-establishing the connection from the mobile subscriber to the IP-based network (51); and
if the CNID is not recognized, sending a negative reply from the first access server to the second access server (45), and starting a new PPP setup by the second access server to establish a new connection from the mobile subscriber to the IP-based network (46);
wherein the step of receiving the identifier for the first access server from the mobile subscriber includes receiving the identifier by the second access server utilizing the User-to-User Signalling (UUS) Supplementary Service before starting subsequent PPP setup.

7. The method of claim 6, wherein the step of providing the mobile subscriber with an identifier for the first access server also includes providing the mobile subscriber with a password that uniquely identifies the mobile subscriber if the mobile subscriber's CNID does not uniquely identify the mobile subscriber, and the method further comprises sending the password together with the CNID from the second access server to the first access server, and utilizing the CNID by the first access server to look up and verify the password.

8. The method of claim 6 or 7, wherein the step of receiving the identifier for the first access server from the mobile subscriber includes receiving in the second access server, an IP address for the first access server.

9. A system for providing secure access and roaming support for a mobile subscriber (21) connected to a telecommunication network in a Semi-Connected Mode (SCM), said system comprising:
a first access server (23) that establishes a call and a point-to-point protocol (PPP) connection from the mobile subscriber (21) to an Internet Protocol (IP)-based network (24);
a second access server (26) that handles a subsequent call origination from the mobile subscriber (21) to the IP-based network (24); and
a PPP tunnel (28) between the first access server (23) and the second access server (26);
wherein the first access server (23) includes:
communication means for providing the mobile subscriber with an identifier for the first access server (23); and
means controlled by a PPP state machine for placing the connection in a Semi-Connected state when the mobile subscriber (21) disconnects the call, and for placing the connection in a Network state when the mobile subscriber (21) originates the subsequent call origination; and
wherein the second access server (26) includes:
communication means for receiving the identifier for the first access server (23) from the mobile subscriber (21), and for sending the Calling Number Identification (CNID) for the mobile subscriber (21) from the second access server (26) to the first access server (23); and
means for tunnelling PPP packets from the second access server (26) to the first access server (23) through the PPP tunnel (28);
whereby the connection from the mobile subscriber (21) to the IP-based network (24) is re-established;
wherein the communication means for receiving the identifier for the first access server (23) from the mobile subscriber (21) includes a signalling means that utilizes the User-to-User Signalling (UUS) Supplementary Service before starting subsequent PPP setup.

10. The system of claim 9, wherein the communication means for providing the mobile subscriber with an identifier for the first access server includes means for providing an IP address for the first access server to the mobile subscriber.

11. The system of claim 9 or 10, wherein the communication means for providing the mobile subscriber with an identifier for the first access server also provides the mobile subscriber with a password that uniquely identifies the mobile subscriber if the mobile subscriber's CNID does not uniquely identify the mobile subscriber, and the first access server further comprises a CNID-to-password lookup table for looking up and verifying that the password is associated with the CNID of the mobile subscriber.

12. A network access server (23) for providing secure access and roaming support for a mobile subscriber (21) connected to a telecommunication network in a Semi-Connected Mode (SCM), said network access server (23) comprising:
means for receiving a call origination request from the mobile subscriber (21), said request including a Calling Number Identification (CNID) for the mobile subscriber (21);
means for establishing a point-to-point (PPP) connection from the mobile subscriber (21) to the network (24);
means for providing the mobile subscriber (21) with an identifier for the network access server (23), wherein the network access server (23) is adapted to provide the mobile subscriber with a password that uniquely identifies the mobile subscriber if the mobile subscriber's CNID does not uniquely identify the mobile subscriber;
means for storing SCM data for the connection and moving the connection to the SCM state when the mobile subscriber (21) disconnects from the network access server (21);
means for receiving from a subsequent access server (26), the CNID of the mobile subscriber (21) when the mobile subscriber (21) originates another call request through the subsequent access server (26);
means for retrieving the SCM data using the CNID of the mobile subscriber (21); and
means for setting up a PPP tunnel (28) through the network (24) to the subsequent access server (23), said PPP tunnel (28) re-establishing the connection from the mobile subscriber (21) to the network (24) by tunnelling PPP packets from the subsequent access server (26) to the network access server (23);
means for determining whether the CNID for the mobile subscriber (21) is recognized; and
means for sending a negative reply from the network access server (23) to the subsequent access server (26) if the CNID is not recognized.

13. A network access server (26) for providing secure access and roaming support for a mobile subscriber (21) connected to a telecommunication network in a Semi-Connected Mode (SCM), said network access server (26) comprising:
means for receiving a call origination request from the mobile subscriber (21), said request including a Calling Number Identification (CNID) for the mobile subscriber (21) and an identifier for a previous access server (23) through which a point-to-point (PPP) connection was previously established from the mobile subscriber (21) to the network (24);
means for sending from the network access server (26) to the previous access server (23), the CNID for the mobile subscriber (21); and
means for setting up a PPP tunnel (28) through the network (24) to the previous access server (23) in response to a request from the previous access server (23), said PPP tunnel (28) re-establishing the connection from the mobile subscriber (21) to the network (24) by tunnelling PPP packets from the network access server (26) to the previous access server (23);
means for analyzing the identifier for the previous access server (23) to determine whether the network access server (26) is the previous access server (23);
means for determining whether the CNID for the mobile subscriber is recognized, upon determining that the network access server (26) is the previous access server (23);
means for re-establishing the connection from the mobile subscriber (21) to the network (24) if the CNID is recognized; and
means for starting a new PPP setup to establish a new connection from the mobile subscriber (21) to the network (24) if the CNID is not recognized;
wherein the network access server (26) is adapted to receive the identifier for the previous access server (23) utilizing a User-to-User Signalling (UUS) Supplementary Service before starting subsequent PPP setup.

## Patentansprüche

1. Verfahren zur Bereitstellung von sicherem Zugang und Roaming-Unterstützung für einen Mobil teilnehmer, der in einem halb angeschlossenen Modus (SCM) an ein Telekommunikationsnetz angeschlossen ist, wobei das Verfahren die folgenden Schritte umfasst:
Aufbauen eines ersten Rufs vom Mobilteilnehmer zu einem ersten Zugangsserver (31);
Herstellen einer Punkt-zu-Punkt-Protokoll (PPP)-Verbindung vom Mobilteilnehmer zu einem Internetprotokoll (IP)-basierten Netz durch den ersten Zugangsserver (31, 33);
Versehen des Mobilteilnehmers mit einer Kennung für den ersten Zugangsserver (32);
Versetzen der Verbindung in den SCM-Zustand (35), wenn der Mobilteilnehmer den ersten Ruf abbaut (34);
Empfangen vom Mobilteilnehmer der Kennung für den ersten Zugangsserver, wobei die Kennung in einem zweiten Zugangsserver empfangen wird, der eine anschließende Rufeinleitung vom Mobilteilnehmer zum IP-basierten Netz abwickelt (36);
Verwenden der Kennung für den ersten Zugangsserver, um vom zweiten Zugangsserver eine Rufnummernidentifizierung (CNID) für den Mobilteilnehmer an den ersten Zugangsserver zu senden (43);
Aufbauen eines PPP-Tunnels durch das IP-basierte Netz zwischen dem ersten Zugangsserver und dem zweiten Zugangsserver (48);
Tunneln von PPP-Paketen vom zweiten Zugangsserver zum ersten Zugangsserver (49); und
Wiederherstellen der Verbindung vom Mobilteilnehmer zum IP-basierten Netz (51);
wobei der Schritt des Empfangens der Kennung für den ersten Zugangsserver vom Mobilteilnehmer ein Empfangen der Kennung durch den zweiten Zugangsserver unter Verwendung des Teilnehmer-zu-Teilnehmer-Signalisierungs (UUS)-Zusatzdienstes vor dem Beginn des anschließenden PPP-Aufbaus umfasst.

2. Verfahren nach Anspruch 1, wobei der Schritt des Versehens des Mobilteilnehmers mit einer Kennung für den ersten Zugangsserver außerdem ein Versehen des Mobilteilnehmers mit einem Passwort umfasst, das den Mobilteilnehmer eindeutig identifiziert, wenn die CNID des Mobilteilnehmers den Mobilteilnehmer nicht eindeutig identifiziert, und das Verfahren ferner ein Senden des Passworts zusammen mit der CNID vom zweiten Zugangsserver an den ersten Zugangsserver und ein Verwenden der CNID durch den ersten Zugangsserver zum Nachschlagen und Bestätigen des Passworts umfasst.

3. Verfahren nach Anspruch 1 oder 2, wobei der Schritt des Empfangens der Kennung für den ersten Zugangsserver vom Mobilteilnehmer ein Empfangen im zweiten Zugangsserver einer IP-Adresse für den ersten Zugangsserver umfasst.

4. Verfahren nach Anspruch 1, 2 oder 3, wobei der Schritt des Herstellens einer Verbindung vom Mobilteilnehmer zum IP-basierten Netz ein Senden einer Anforderung zur Verwendung des SCM vom Mobilteilnehmer an den ersten Zugangsserver umfasst.

5. Verfahren nach einem der Ansprüche 1 bis 4, wobei der Schritt des Herstellens einer Verbindung vom Mobilteilnehmer zum IP-basierten Netz ein Bestimmen durch den ersten Zugangsserver umfasst, dass der Mobilteilnehmer zur Verwendung des SCM berechtigt ist.

6. Verfahren zur Bereitstellung von sicherem Zugang und Roaming-Unterstützung für einen Mobilteilnehmer, der in einem halb angeschlossenen Modus (SCM) an ein Telekommunikationsnetz angeschlossen ist, wobei das Verfahren die folgenden Schritte umfasst:
Aufbauen eines ersten Rufs vom Mobilteilnehmer zu einem ersten Zugangsserver (31);
Herstellen einer Punkt-zu-Punkt-Protokoll (PPP)-Verbindung vom Mobilteilnehmer zu einem Internetprotokoll (IP)-basierten Netz durch den ersten Zugangsserver (31, 33);
Versehen des Mobilteilnehmers mit einer Kennung für den ersten Zugangsserver (32);
Versetzen der Verbindung in den SCM-Zustand, wenn der Mobilteilnehmer den ersten Ruf abbaut (34, 35);
Empfangen vom Mobilteilnehmer der Kennung für den ersten Zugangsserver, wobei die Kennung in einem zweiten Zugangsserver empfangen wird, der eine anschließende Rufeinleitung vom Mobilteilnehmer zum IP-basierten Netz abwickelt (36);
Analysieren durch den zweiten Zugangsserver der Kennung für den ersten Zugangsserver, um zu bestimmen, ob es sich beim zweiten Zugangsserver um den ersten Zugangsserver handelt (37);
wenn es sich beim zweiten Zugangsserver um den ersten Zugangsserver handelt:
Bestimmen, ob eine Rufnummernidentifizierung (CNID) für den Mobilteilnehmer erkennt wird (38);
Wiederherstellen, wenn die CNID erkannt wird, der Verbindung vom Mobilteilnehmer zum IP-basierten Netz (42); und
Beginnen, wenn die CNID nicht erkannt wird, eines neuen PPP-Aufbaus, um eine neue Verbindung vom Mobilteilnehmer zum IP-basierten Netz herzustellen (39);
wenn es sich beim zweiten Zugangsserver nicht um den ersten Zugangsserver handelt:
Senden der CNID für den Mobilteilnehmer vom ersten Zugangsserver an den ersten Zugangsserver, (43);
Bestimmen, ob die CNDI für den Mobilteilnehmer durch den ersten Zugangsserver erkannt wird (44);
Verwenden, wenn die CNID erkannt wird, der CNID durch den ersten Zugangsserver zum Nachschlagen von SCM-Daten für die Verbindung (47), Aufbauen eines PPP-Tunnels durch das I-basierte Netz zwischen dem ersten Zugangsserver und dem zweiten Zugangsserver (48), Tunneln von PPP-Paketen vom zweiten Zugangsserver zum ersten Zugangsserver (49) und Wiederherstellen der Verbindung vom Mobilteilnehmer zum IP-basierten Netz (51); und
Senden, wenn die CNID nicht erkannt wird, einer negativen Antwort vom ersten Zugangsserver an den zweiten Zugangsserver (45) und Beginnen eines neuen PPP-Aufbaus durch den zweiten Zugangsserver, um eine neue Verbindung vom Mobilteilnehmer zum IP-basierten Netz herzustellen (46);
wobei der Schritt des Empfangens der Kennung für den ersten Zugangsserver vom Mobilteilnehmer ein Empfangen der Kennung durch den zweiten Zugangsserver unter Verwendung des Teilnehmer-zu-Teilnehmer-Signalisierungs (UUS)-Zusatzdienstes vor dem Beginn des anschließenden PPP-Aufbaus umfasst.

7. Verfahren nach Anspruch 6, wobei der Schritt des Versehen des Mobil teilnehmers mit einer Kennung für den ersten Zugangsserver außerdem ein Versehen des Mobilteilnehmers mit einem Passwort umfasst, das den Mobilteilnehmer eindeutig identifiziert, wenn die CNID des Mobilteilnehmers den Mobilteilnehmer nicht eindeutig identifiziert, und das Verfahren ferner ein Senden des Passworts zusammen mit der CNID vom zweiten Zugangsserver an den ersten Zugangsserver und ein Verwenden der CNID durch den ersten Zugangsserver zum Nachschlagen und Bestätigen des Passworts umfasst.

8. Verfahren nach Anspruch 6 oder 7, wobei der Schritt des Empfangens der Kennung für den ersten Zugangsserver vom Mobilteilnehmer ein Empfangen im zweiten Zugangsserver einer IP-Adresse für den ersten Zugangsserver umfasst.

9. System zum Bereitstellen von sicherem Zugang und Roaming-Unterstützung für einen Mobilteilnehmer (21), der in einem halb angeschlossenen Modus (SCM) an ein Telekommunikationsnetz angeschlossen ist, wobei das System umfasst:
einen ersten Zugangsserver (23), der einen Ruf und eine Punkt-zu-Punkt-Protokoll (PPP)-verbindung vom Mobilteilnehmer (21) zu einem Internetprotokoll (IP)-basierten Netz (24) aufbaut;
einen zweiten Zugangsserver (26), der eine anschließende Rufeinleitung vom Mobilteilnehmer (21) zum IP-basierten Netz (24) abwickelt;
einen PPP-Tunnel (28) zwischen dem ersten Zugangsserver (23) und dem zweiten Zugangsserver (26);
wobei der erste Zugangsserver, (23) umfasst:
Kommunikationsmittel zum Versehen des Mobilteilnehmers mit einer Kennung für den ersten Zugangsserver (23); und
Mittel, die durch eine PPP-Zustandsmaschine gesteuert werden, zum Versetzen der Verbindung in einen halb angeschlossenen Zustand, wenn der Mobilteilnehmer (21) den Ruf abbaut, und zum Versetzen der Verbindung in einen Netzzustand, wenn der Mobilteilnehmer (21) die anschließende Rufeinleitung einleitet; und
wobei der zweite Zugangsserver (26) umfasst:
Kommunikationsmittel zum Empfangen der Kennung für den ersten Zugangsserver (23) vom Mobilteilnehmer (21) und zum Senden der Rufnummernidentifizierung (CNID) für den Mobilteilnehmer (21) vom zweiten Zugangsserver (26) an den ersten Zugangsserver (23); und
Mittel zum Tunneln von PPP-Paketen vom zweiten Zugangsserver (26) zum ersten Zugangsserver (23) durch den PPP-Tunnel (28);
wodurch die Verbindung vom Mobilteilnehmer (21) zum IP-basierten Netz (24) wiederhergestellt wird;
wobei das Kommunikationsmittel zum Empfangen der Kennung für den ersten Zugangsserver (23) vom Mobilteilnehmer (21) ein Signalisierungsmittel umfasst, das den Teilnehmer-zu-Teilnehmer-Signalisierungs (UUS)-Zusatzdienst vor dem Beginn des anschließenden PPP-Aufbaus verwendet.

10. System nach Anspruch 9, wobei das Kommunikationsmittel zum Versehen des Mobilteilnehmers mit einer Kennung für den ersten Zugangsserver Mittel zum Versehen des Mobilteilnehmers mit einer IP-Adresse für den ersten Zugangsserver umfasst.

11. System nach Anspruch 9 oder 10, wobei das Kommunikationsmittel zum Versehen des Mobilteilnehmers mit einer Kennung für den ersten Zugangsserver den Mobilteilnehmer außerdem mit einem Password versieht, das den Mobilteilnehmer eindeutig identifiziert, wenn die CNID des Mobilteilnehmers den Mobilteilnehmer nicht eindeutig identifiziert, und der erste Zugangsserver ferner eine CNID-zu-Passwort-Nachschlagetabelle zum Nachschlagen und Bestätigen umfasst, dass das Passwort mit der CNID des Mobilteilnehmers assoziiert ist.

12. Netzzugangsserver (23) zum Bereitstellen von sicherem Zugang und Roaming-Unterstützung für einen Mobilteilnehmer (21), der in einem halb angeschlossenen Modus (SCM) an ein Telekommunikationsnetz angeschlossen ist, wobei der Netzzugangsserver (23) umfasst:
Mittel zum Empfangen einer Rufeinleitungsanforderung vom Mobilteilnehmer (21), wobei die Anforderung eine Rufnummernidentifizierung (CNID) für den Mobilteilnehmer (21) umfasst;
Mittel zum Herstellen einer Punkt-zu-Punkt (PPP)-Verbindung vom Mobilteilnehmer (21) zum Netz (24);
Mittel zum Versehen des Mobilteilnehmers (21) mit einer Kennung für den Netzzugangsserver (23), wobei der Netzzugangsserver (23) so ausgelegt ist, dass er den Mobilteilnehmer mit einem Passwort versieht, das den Mobilteilnehmer eindeutig identifiziert, wenn die CNID des Mobilteilnehmer den Mobilteilnehmer nicht eindeutig identifiziert;
Mittel zum Speichern von SCM-Daten für die Verbindung und Versetzen der Verbindung in den SCM-Zustand, wenn sich der Mobilteilnehmer (21) vom Netzzugangsserver (23) trennt;
Mittel zum Empfangen von einem nachfolgenden Zugangsserver (26) der CNID des Mobilteilnehmers (21), wenn der Mobilteilnehmer (21) eine andere Rufanforderung durch den nachfolgenden Zugangsserver (26) einleitet;
Mittel zum Abrufen der SCM-Daten unter Verwendung der CNID des Mobilteilnehmers (21); und
Mittel zum Aufbauen eines PPP-Tunnels (28) durch das Netz (24) zum nachfolgenden Zugangsserver, (26), wobei der PPP-Tunnel (28) die Verbindung vom Mobilteilnehmer (21) zum Netz (24) durch Tunneln von PPP-Paketen vom nachfolgenden Zugangsserver (26) zum Netzzugangsserver (23) wiederherstellt;
Mittel zum Bestimmen, ob die CNID für den Mobilteilnehmer (21) erkannt wird; und
Mittel zum Senden einer negativen Antwort vom Netzzugangsserver (23) an den nachfolgenden Zugangsserver (26), wenn die CNID nicht erkannt wird.

13. Netzzugangsserver (26) zum Bereitstellen von sicherem Zugang und Roaming-Unterstützung für einen Mobilteilnehmer (21), der in einem halb angeschlossenen Modus (SCM) an ein Telekommunikationsnetz angeschlossen ist, wobei der Netzzugangsserver (3) umfasst:
Mittel zum Empfangen eine Rufeinleitungsanforderung vom Mobilteilnehmer (21), wobei die Anforderung eine Rufnummernidentifizierung (CNID) für den Mobilteilnehmer (21) und eine Kennung für einen vorhergehenden Zugangsserver (23) umfasst, durch welchen vorher eine Punkt-zu-Punkt (PPP)-Verbindung vom Mobilteilnehmer (21) zum Netz (24) hergestellt wurde;
Mittel zum Senden vom Netzzugangsserver (26) der CNID für den Mobilteilnehmer (21) an den vorhergehenden Zugangsserver (23); und
Mittel zum Aufbauen eines PPP-Tunnels (28) durch das Netz (24) zum vorhergehenden Zugangsserver (23) als Reaktion auf eine Anforderung vom vorhergehenden Zugangsserver (23), wobei der PPP-Tunnel (28) die Verbindung vom Mobilteilnehmer (21) zum Netz (24) durch Tunneln von PPP-Paketen vom Netzzugangsserver (26) zum vorhergehenden Zugangsserver (23) wiederherstellt;
Mittel zum Analysieren der Kennung für den vorhergehenden Zugangsserver (23), um zu bestimmen, ob es sich beim Netzzugangsserver (26) um den vorhergehenden Zugangsserver (23) handelt;
Mittel zum Bestimmen, ob die CNID für den Mobilteilnehmer erkannt wird, nach dem Bestimmen, dass es sich beim Netzzugangsserver (26) um den vorhergehenden Zugangsserver (23) handelt;
Mittel zum Wiederherstellen der Verbindung vom Mobilteilnehmer (21) zum Netz (24), wenn die CNID erkannt wird; und
Mittel zum Beginnen eines neuen PPP-Aufbaus, um eine neue Verbindung vom Mobilteilnehmer (21) zum Netz (24) herzustellen, wenn die CNID nicht erkannt wird;
wobei der Netzzugangsserver (26) so ausgelegt ist, dass er die Kennung für den vorhergehenden Zugangsserver (23) unter Verwendung eines Teilnehmerzu-Teilnehmer-Signalisierungs (UUS)-Zusatzdienstes vor dem Beginn des anschließenden PPP-Aufbaus empfängt.

## Revendications

1. Procédé de fourniture d'un accès sécurisé et d'un support itinérant pour un abonné mobile connecté à un réseau de télécommunication dans un mode semi-connecté (SCM), ledit procédé comprenant les étapes consistant à:
établir un premier appel depuis l'abonné mobile vers un premier serveur d'accès (31) ;
établir une connexion de protocole point à point (PPP) depuis l'abonné mobile vers un réseau basé sur protocole Internet (IP) via le premier serveur d'accès (31,33) ;
fournir à l'abonné mobile un identifiant pour le premier serveur d'accès (32) ;
déplacer la connexion à l'état SCM (35) quand l'abonné mobile déconnecte le premier appel (34) ;
recevoir en provenance de l'abonné mobile l'identifiant pour le premier serveur d'accès, ledit identifiant étant reçu dans un second serveur d'accès qui gère un appel suivant émanant de l'abonné mobile vers le réseau basé sur IP (36) ;
utiliser l'identifiant pour le premier serveur d'accès afin d'envoyer depuis le second serveur d'accès vers le premier serveur d'accès, un identifiant de numéro appelant (CNID) pour l'abonné mobile (43) ;
établir un tunnel PPP à travers le réseau basé sur IP entre le premier serveur d'accès et le second serveur d'accès (48) ;
tunneliser les paquets PPP depuis le second serveur d'accès vers le premier serveur d'accès (49) ; et
ré-établir la connexion depuis l'abonné mobile vers le réseau basé sur IP (51) ;
dans lequel l'étape de réception de l'identifiant pour le premier serveur d' accès en provenance de l' abonné mobile inclut de recevoir l'identifiant par le second serveur d'accès en utilisant le service supplémentaire de signalisation utilisateur à utilisateur (UUS) avant de démarrer l'établissement PPP suivant.

2. Procédé selon la revendication 1, dans lequel l'étape de fourniture à l'abonné mobile d'un identifiant pour le premier serveur d'accès inclut aussi de fournir à l'abonné mobile un mot de passe qui identifie de manière unique l'abonné mobile si le CNID de l'abonné mobile n'identifie pas de manière unique l'abonné mobile, et le procédé comprend en outre l'envoi du mot de passe conjointement au CNID depuis le second serveur d'accès vers le premier serveur d'accès, et l'utilisation du CNID par le premier serveur d'accès afin de rechercher et vérifier le mot de passe.

3. Procédé selon la revendication 1 ou 2, dans lequel l'étape de réception de l'identifiant pour le premier serveur d'accès en provenance de l'abonné mobile inclut de recevoir dans le second serveur d'accès, une adresse IP pour le premier serveur d'accès.

4. Procédé selon la revendication 1,2 ou 3, dans lequel l'étape d'établissement d'une connexion depuis l'abonné mobile vers le réseau basé sur IP inclut l'envoi d'une demande pour utiliser le SCM depuis l'abonné mobile vers le premier serveur d'accès.

5. Procédé selon une des revendications 1 à 4, dans lequel l'étape d'établissement d'une connexion depuis l'abonné mobile vers le réseau basé sur IP inclut de déterminer par le premier serveur d'accès que l'abonné mobile est autorisé à utiliser le SCM.

6. Procédé de fourniture d'un accès sécurisé et d'un support itinérant pour un abonné mobile connecté à un réseau de télécommunication dans un mode semi-connecté (SCM), ledit procédé comprenant les étapes consistant à :
établir un premier appel depuis l'abonné mobile vers un premier serveur d'accès (31) ;
établir une connexion de protocole point à point (PPP) depuis l'abonné mobile vers un réseau basé sur protocole Internet (IP) via le premier serveur d'accès (31,33) ;
fournir à l'abonné mobile un identifiant pour le premier serveur d'accès (32) ;
déplacer la connexion à l'état SCM quand l'abonné mobile déconnecte le premier appel (34,35) ;
recevoir depuis l'abonné mobile, l'identifiant pour le premier serveur d'accès, ledit identifiant étant reçu dans un second serveur d'accès qui gère un appel suivant émanant de l'abonné mobile vers le réseau basé sur IP (36) ;
analyser par le second serveur d'accès, l'identifiant pour le premier serveur d'accès pour déterminer si le second serveur d'accès est le premier serveur d'accès (37) ;
si le second serveur d'accès est le premier serveur d'accès :
déterminer si un identifiant de numéro appelant (CNID) pour l'abonné mobile est reconnu (38) ;
si le CNID est reconnu, ré-établir la connexion depuis l'abonné mobile vers le réseau basé sur IP (42) ; et
si le CNID n'est pas reconnu, démarrer un nouvel établissement de PPP afin d'établir une nouvelle connexion depuis l'abonné mobile vers le réseau basé sur IP (39) ;
si le second serveur d'accès n'est pas le premier serveur d'accès;
envoyer depuis le second serveur d'accès vers le premier serveur d'accès, le CNID pour l'abonné mobile (43) ;
déterminer si le CNID pour l'abonné mobile est reconnu par le premier serveur d'accès (44) ;
si le CNID est reconnu, utiliser le CNID par le premier serveur d'accès afin de rechercher des données SCM pour la connexion (47), établir un tunnel PPP à travers le réseau basé sur IP entre le premier serveur d'accès et le second serveur d'accès (48), tunneliser des paquets PPP depuis le second serveur d'accès vers le premier serveur d'accès (49), et ré-établir la connexion depuis l'abonné mobile vers le réseau basé sur IP (51); et
si le CNID n'est pas reconnu, envoyer une réponse négative depuis le premier serveur d'accès vers le second serveur d'accès (45), et démarrer un nouvel établissement de PPP par le second serveur d'accès afin d'établir une nouvelle connexion depuis l'abonné mobile vers le réseau basé sur IP (46) ;
dans lequel l'étape de réception de l'identifiant pour le premier serveur d'accès depuis l'abonné mobile inclut de recevoir l'identifiant par le second serveur d'accès en utilisant le service supplémentaire de signalisation d'utilisateur à utilisateur (UUS) avant de démarrer un établissement de PPP suivant.

7. Procédé selon la revendication 6, dans lequel l'étape de fourniture à l'abonné mobile d'un identifiant pour le premier serveur d'accès inclut aussi de fournir à l'abonné mobile un mot de passe qui identifie de manière unique l'abonné mobile si le C_{NID} de l'abonné mobile n'identifie pas de manière unique l'abonné mobile, et le procédé comprend en outre l'envoi du mot de passe conjointement au CNID depuis le second serveur d'accès vers le premier serveur d'accès, et l'utilisation du CNID par le premier serveur d'accès afin de rechercher et vérifier le mot de passe.

8. Procédé selon la revendication 6 ou 7, dans lequel l'étape de réception de l'identifiant pour le premier serveur d'accès depuis l'abonné mobile inclut de recevoir dans le second serveur d'accès, une adresse IP pour le premier serveur d'accès.

9. Système de fourniture d'un accès sécurisé et d'un support itinérant pour un abonné mobile (21) connecté à un réseau de télécommunication dans un mode semi-connecté (SCM), ledit système comprenant :
un premier serveur d'accès (23) qui établit un appel et une connexion de protocole de point à point (PPP) depuis l'abonné mobile (21) vers un réseau basé sur protocole Internet (24) ;
un second serveur d'accès (26) qui gère un appel suivant émanant de l'abonné mobile (21) vers le réseau basé sur IP (24) ; et
un tunnel PPP (28) entre le premier serveur d'accès (23) et le second serveur d'accès (26) ;
dans lequel le premier serveur d'accès (23) inclut:
des moyens de communication pour fournir à l'abonné mobile un identifiant pour le premier serveur d'accès (23) ; et
des moyens commandés par un machine à états de PPP pour placer la connexion dans un état semi-connecté quand l'abonné mobile (21) déconnecte l'appel et pour placer la connexion dans un état de réseau quand l'appel suivant émane de l'abonné mobile (21) ; et
dans lequel le second serveur d'accès (26) inclut:
des moyens de communication pour recevoir l'identifiant pour le premier serveur d'accès (23) depuis l'abonné mobile (21) et pour envoyer l'identification de numéro appelant (NID) pour l'abonné mobile (21) depuis le second serveur d'accès (26) vers le premier serveur d'accès (23) ; et
des moyens pour tunneliser des paquets PPP depuis le second serveur d'accès (26) vers le premier serveur d'accès (23) via le tunnel PPP (28) ;
moyennant quoi la connexion depuis l'abonné mobile (21) vers le réseau basé sur IP (24) est ré-établie ;
dans lequel les moyens de communication pour recevoir l'identifiant pour le premier serveur d'accès (23) depuis l'abonné mobile (21) incluent un moyen de signalisation qui utiliser le service supplémentaire de signalisation d'utilisateur à utilisateur (UUS) avant de démarrer l'établissement de PPP suivant.

10. Système selon la revendication 9, dans lequel les moyens de communication pour fournir à l'abonné mobile un identifiant pour le premier serveur d'accès incluent des moyens pour fournir une adresse IP pour le premier serveur d'accès à l'abonné mobile.

11. Système selon la revendication 9 ou 10, dans lequel les moyens de communication pour fournir à l'abonné mobile un identifiant pour le premier serveur d'accès fournissent aussi à l'abonné mobile un mot de passe qui identifie de manière unique l'abonné mobile si le CNID de l'abonné mobile n'identifie pas de manière unique l'abonné mobile, et le premier serveur d'accès comprend en outre une table de recherche mot de passe/CNID pour rechercher et vérifier que le mot de passe est associé au CNID de l'abonné mobile.

12. Serveur d'accès au réseau (23) pour fournir un accès sécurisé et un support itinérant pour un abonné mobile (21) connecté à un réseau de télécommunication dans un mode semi-connecté (SCM), ledit serveur d'accès au réseau (23) comprenant :
des moyens pour recevoir une demande d'émission d'appel provenant de l'abonné mobile (21), ladite demande incluant un identification de numéro appelant (CNID pour l'abonné mobile (21) ;
des moyens pour établir une connexion de point à point (PPP) de l'abonné mobile (21) au réseau (24) ;
des moyens pour fournir à l'abonné mobile (21) un identifiant pour le serveur d'accès au réseau (23), dans lequel le serveur d'accès au réseau (23) est adapté afin de fournir à l'abonné mobile un mot de passe qui identifie de manière unique l'abonné mobile si le CNID de l'abonné mobile n'identifie pas de manière unique l'abonné mobile ;
des moyens pour mémoriser des données SCM pour la connexion et déplacer la connexion à l'état SCM quand l'abonné mobile (21) se déconnecte du serveur d'accès au réseau (21) ;
des moyens pour recevoir en provenance d'un serveur d'accès suivant (26), le CNID de l'abonné mobile (21) quand l'abonné mobile (21) émet une autre demande d'appel via le serveur d'accès suivant (26) ;
des moyens pour extraire les données SCM en utilisant le CNID de l'abonné mobile (21) ; et
des moyens pour établir un tunnel PPP (28) à travers le réseau (24) vers le serveur d'accès suivant (23), ledit tunnel PPP (28) ré-établissant la connexion de l'abonné mobile (21) au réseau (24) en tunnelisant les paquets PPP depuis le serveur d'accès suivant (26) vers le serveur d'accès au réseau (23) ;
des moyens pour déterminer si le CNID pour l'abonné mobile (21) est reconnu ; et
des moyens pour envoyer une réponse négative depuis le serveur d'accès au réseau (23) vers le serveur d'accès suivant (26) si le CNID n'est pas reconnu.

13. Serveur d'accès au réseau (26) pour fournir un accès sécurisé et un support itinérant pour un abonné mobile (21) connecté à un réseau de télécommunication dans un mode semi-connecté (SCM), ledit serveur d'accès au réseau (26) comprenant :
des moyens pour recevoir une demande d'émission d'appel provenant de l'abonné mobile (21), ladite demande incluant une identification de numéro appelant (CNID) pour l'abonné mobile (21) et un identifiant pour un serveur d'accès précédent (23) via lequel une connexion de point à point (PPP) a été précédemment établie depuis l'abonné mobile (21) vers le réseau (24);
des moyens pour envoyer du serveur d'accès au réseau (26) au serveur d'accès précédent (23), le CNID pour l'abonné mobile (1) ; et
des moyens pour établir un tunnel PPP (28) à travers le réseau (24) vers le serveur d'accès précédent (23) en réponse à une demande provenant du serveur d'accès précédent (23), ledit tunnel PPP (28) ré-établissant la connexion de l'abonné mobile (21) vers le réseau (24) en tunnelisant des paquets PPP du serveur d'accès au réseau (26) vers le serveur d'accès précédent (23) ;
des moyens pour analyser l'identifiant pour le serveur d'accès précédent (23) afin de déterminer si le serveur d'accès au réseau (26) est le serveur d'accès précédent (23) ;
des moyens pour déterminer si le CNID pour l'abonné mobile est reconnu, lors de la détermination que le serveur d'accès au réseau (26) est le serveur d'accès précédent (23) ;
des moyens pour ré-établir la connexion de l'abonné mobile (21) au réseau (24) si le CNID est reconnu ; et
des moyens pour démarrer un nouvel établissement de PPP afin d'établir une nouvelle connexion de l'abonné mobile (21) au réseau (24) si le CNID n'est pas reconnu ;
dans lequel le serveur d'accès au réseau (26) est adapté afin de recevoir l'identifiant pour le serveur d'accès précédent (23) en utilisant un service supplémentaire de signalisation d'utilisateur à utilisateur (UUS) avant de démarrer un établissement de PPP suivant.
